# EUROPÄISCHE PATENTANMELDUNG

(11) **EP 0 565 480 A2**
(43) Veröffentlichungstag der Anmeldung: **13.10.1993**
(21) Anmeldenummer: 93710005.5
(22) Anmeldetag: 05.04.1993
(51) Int. Cl.: G06K 19/073

(54) **Indikation unsachgemäss behandelter Chipkarten**

(30) Priorität: 10.04.1992 DE 4212111
(71) Anmelder: Angewandte Digital Elektronik GmbH, 21521 Dassendorf (DE)
(72) Erfinder: Kreft, H.-D., W-2055 Dassendorf (DE)
(74) Vertreter: Mierswa, Klaus, Dipl.-Ing.

(57) **Zusammenfassung**

Es wird die Verwendung (Einbettung) von Indikatorelementen in Chipkarten beschrieben, welche auf physikalische oder andere Einflüsse zur Zerstörung der Funktion von Chipkarten in eindeutiger und nachweisbarer Weise reagieren. Die Indikatorelemente können derart zur Befreiung von Garantiepflichten von Kartenherausgebern beitragen, wenn vorsätzliche Zerstörung vorliegt.

## Beschreibung

Es werden vermehrt am Markt Plastikkarten eingesetzt, welche einen Chip enthalten, (Chipkarten). Auf diesen Chipkarten sind Speicher implementiert, welche Daten für Zwecke wie Telefonieren, Parken, Kantinenessen, Börsenfunktion, Zeiterfassung, Gleitzeit und vieles mehr speichern. Multifunktionskarten erlauben die Speicherung unterschiedlicher Parameter für verschiedene Anwendungen auf einer Karte, wodurch beispielsweise Telefonieren und Essensausgabe mit einer Karte gehandhabt werden kann.

Die unterschiedlichen Daten auf der Karte stellen Werte und Nachweise dar, die vor unbefugter Manipulation zu schützen sind. Die einfachste Manipulation stellen Eingriffe und unsachgemäße Behandlung wie übermäßiges Erwärmen, mechanisches Biegen, Beeinflussung durch übermäßig starke magnetische und elektrische Felder dar. Mit zunehmender Verbreitung sind der Fantasie von Kartennutzern zum Beeinflussen von Karten keine Grenzen gesetzt, vor allem, wenn durch die Zerstörung der Karten ein Vorteil erzielt werden kann.

Telefonkarten werden geschickt zerstört, um die kostenlose Ersatzausgabe von Karten mit neuen Telefoneinheiten zu erwirken.

Für den Kartenherausgeber gibt es bisher kaum eine Möglichkeit, die unsachgemäße Behandlung der Karte nachzuweisen. Auch der Wiederholungstäter ist nicht feststellbar, da das Aufnehmen von Person in Dateien aufgrund vermuteter krimineller Tätigkeit nicht gestattet ist.

Es fehlt für Karten ein leicht überprüfbarer und von neutraler Seite (TÜV, Verbraucherschutz, Warentester) zu führender Nachweis, ob eine bestimmte Art der Beschädigung stattgefunden hat.

Es ist Ziel dieses Patentbegehrens, für die geschilderte Problematik eine Lösung anzugeben.

### Erläuterung der patentgemäßen Lösung:

Wie in der einführenden Problemstellung erläutert, zielt die patentgemäße Erfindung darauf ab, die unsachgemäße Behandlung von Chipkarten nachweisbar zu gestalten.

Es kann zwischen zwei Fällen der unsachgemäßen Behandlung unterschieden werden. Im ersten Fall handelt es sich um nicht vorsätzliche unsachgemäße Behandlung, die darin besteht, daß eine Karte zufällig ohne Vorsatz einem übermäßigen Einfluß ausgesetzt wird, der die Kartenfunktion zerstört. Im zweiten Fall wird die Zerstörung bewußt und vorsätzlich herbeigeführt, wobei menschliche Intelligenz eingesetzt wird, um die Nichtfunktion als zufällige, während des normalen Betriebes auftretende Gegebenheit darzustellen.

Unter unsachgemäßer Behandlung werden hier beide Fälle zusammengefaßt. Beiden Fällen soll gemeinsam sein, daß die Zerstöreinflüsse derart stark sind, daß ein Kartenherausgeber für die Funktionsfähigkeit einer Karte nicht mehr garantieren (haften) muß. Diese Haftungs-, Garantiebefreiung wird dann der Fall sein, wenn nachgewiesen werden kann, daß die Karte wesentlich stärkeren Zerstöreinflüssen ausgesetzt war, als es die normale und ordnungsgemäße Nutzung mit sich bringt.

Als Beispiel soll die Temperaturbeeinflussung einer Karte dienen. Wird eine Karte in einem Land südlicher Breite direkter Sonneneinstrahlung ausgesetzt und liegt auf einer dunklen, metallenen Unterlage, so kann die Karte sich auf mehr als 80 Grad Celsius erwärmen. Die CMOS-Bauteile der Karte bleiben bis zu einer Temperatur von ca. 130 Grad Celsius funktionsfähig, der Speicher auf der Karte verliert keine Daten. Werden bestimmte Plastikmaterialien verwendet, erhalten diese auch das äußere Erscheinungsbild. Ein in die Karte eingeschweißtes Indikationselement, könnte beispielsweise bei Erreichen von 100 Grad Celsius zerstört werden oder sich in temperaturabhängiger, eindeutiger Weise so verändern, daß der unsachgemäße Temperatureinfluß nachweisbar ist. In diesem Falle, könnte nach Prüfung des Indikators durch eine unabhängige Instanz die Entscheidung getroffen werden, ob der Kartenherausgeber für den Ausfall der Kartenfunktion zu haften hat.

Die Herausnahme des Indikators während der unsachgemäßen, vorsätzlichen Beeinflussung ist durch ein festes Verschweißen oder Einkleben in das Plastikmaterial der Karte auszuschließen.

### Beschreibung der Ansprüche :

Anspruch 1 beschreibt die Einbettung von Indikatorelementen in das Verpackungsmaterial von Plastikarten als Mittel zum Nachweis der Beeinflussung von Karten auf physikalischem oder chemischem Wege. Der Nachweis einer Beeinflussung ist dann gegeben, wenn das Indikatorelement eine Veränderung erfährt, welche die Folge der Beeinflussung ist.

Anspruch 2 beschreibt die elektronische Verbindung eines Indikatorelementes mit den elektronischen Komponenten der Karte. Dies ist sinnvoll, wenn beispielsweise ein zeitlicher Verlauf der Beeinflussung im Speicher aufgezeichnet werden soll. So könnten Temperaturverläufe, Beschleunigungen, Druckänderungen aufgezeichnet werden. Es wäre derart möglich, den Verlauf von Beeinflussungen festzuhalten und daraus Folgerungen über die vergangene Behandlung der Karte zu ziehen.

Werden Sensorelemente auf der Karte verwendet, können diese auch dazu dienen Umwelteinflüsse zu registrieren, denen der Träger der Karte ausgesetzt ist. Beispielsweise können Strahlungseinflüsse derart festgestellt werden und sowohl unsachgemäße Behandlung der Karte als auch gefährdende Umweltgegebenheiten für den Kartenträger indizieren.

Anspruch 3 beschreibt aktive Indikationselemente, welche bei Erreichen oder Überschreiten bestimmter Beeinflussungswerte einen zusätzlichen, sichtbaren Effekt auf der Karte hervorrufen. Bei Überschreiten einer Temperatur kann beispielsweise eine Flüssigkeit aus einer flexiblen Pille in der Karte austreten (verdampfen), welche die Oberfläche der Karte wölbt und die unsachgemäße Beeinflussung sofort anzeigt.

Am Markt sind im Wesentlichen zwei Arten von Karten vorhanden, Kontaktchipkarten und kontaktfrei arbeitende Chipkarten, wie sie beispielsweise in der DE 34 47 560 C2 "Einrichtung zur berührungslosen Daten- und Energieübertragung" beschrieben sind. Die kontaktfreien Karten haben den Vorteil, daß ihre elektronischen Elemente vollkommen in Plastik eingebettet sind. Eine zerstörende, nicht unmittelbar ersichtliche Manipulation kann nur durch Maßnahmen erfolgen, welche das Plastikmaterial nicht sichtbar beeinflußt. Kontaktfreie Karten sind damit leichter gegen Manipulation zu schützen als kontaktbehaftete Karten.

Bei Kontaktchipkarten liegen Kontakte zur Energieversorgung des Chips offen benutzbar vor, welche gegen mechanische, chemische und elektrische Manipulation keinen Schutz bieten. Hier eignen sich nur Indikationselemente, welche beispielsweise in die Leitungsbahn zwischen Kontakt- und Elektronikelemente gelegt sind. So können durchgebrannte Diodenstrecken zum Nachweis von Strömen dienen, welche eine bestimmtes zulässiges Maß überschritten haben.

Die patentgemäße Lösung kann sowohl vorbeugend, wie auch als Nachweis benutzt werden. Im vorbeugenden Falle wird die Karte mit dem Indikatorelement versehen, welches bei einer bestimmten, voraussehbaren, unsachgemäßen Beeinflussung in vorgesehener Weise reagieren wird. Damit stellt sich der Kartenherausgeber auf eine vermutbare, vorsätzliche Beeinflussung ein, welcher durch das eingebaute Indikatorelement vorbeugend begegnet wird.

Da der geistigen Findungsgabe zur unsachgemäßen Beeinflussung keine Grenzen gesetzt sind, werden neue und unbekannte Methoden der Beeinflussung angewandt werden, um einen Effekt zu erzielen. Es ist damit zu rechnen, daß besonders geschickte Beeinflussungen sich rasch ausbreiten werden, wenn sie einen wirtschaftlichen Erfolg versprechen. Die Beeinflussung von Telefonkarten zwecks kostenfreiem Telefonieren ist dafür ein Beispiel. Der geistigen Findungsgabe, den denkbaren Beeinflussungen zuvorzukommen ist ebenfalls keine Grenze gesetzt. Für die hier vorgeschlagene patentgemäße Lösung bedeutet dies einen dynamischen Prozess, der zwischen der Abwehr bekannter und Vorbeuge vorhersehbarer Beeinflussung abwechselt und entsprechend neue Ausgestaltungen von Indikatorelementen hervorbringt.

In jedem Falle könnte bekannten Beeinflussungen durch Herausgabe von neuen Karten begegnet werden, welche ein Indikationselement zum Nachweis einer sich verbreitenden Beeinflussung haben. Karten ohne dies Element könnten nach Ablauf einer Frist ungültig werden.

## Patentansprüche

**Anspruch 1:**
Maßnahmen zum Nachweis unsachgemäß behandelter Chipkarten dadurch gekennzeichnet, daß in das Verpackungsmaterial von Chipkarten Indikationselemente eingebettet sind, welche sich in eindeutiger Weise bei physikalischer oder chemischer Beeinflussung so verändern, daß ihre Veränderung eine Indikation für die vollzogene Beeinflussung ist.

**Anspruch 2:**
Anspruch 2 gemäß Anspruch 1 dadurch gekennzeichnet, daß die Indikationselemente als elektronische Sensorelemente ausgeprägt sind und mit den elektronischen Schaltelementen einer Chipkarte derart verbunden sind, daß sie ihre Sensordaten direkt an die elektronischen Elemente der Karte abgeben und dort gespeichert werden können.

**Anspruch 3:**
Anspruch 3 gemäß Anspruch 1,2 dadurch gekennzeichnet, daß die Indikationselemente als aktive Indikationselemente ausgeprägt sind, welche bei Überschreitung bestimmter physikalischer oder chemischer Werte eine deutlich erkennbare Veränderung der Karte oder bestimmter Kartenmerkmale hervorrufen.
